# FASCICULE DE BREVET EUROPEEN

(11) **EP 2 893 074 B1**
(45) Date de publication et mention de la délivrance du brevet: **10.04.2019**
(21) Numéro de dépôt: 13745048.2
(22) Date de dépôt: 31.07.2013
(51) Int. Cl.: D07B 1/06, B21C 1/00, C21D 8/06, C22C 38/00

(54) **FIL D'ACIER À HAUTE TRÉFILABILITÉ COMPRENANT UN TAUX DE CARBONE EN MASSE COMPRIS ENTRE 0,6 % ET 0,74 % BORNES INCLUSES**
STAHLDRAHT MIT HERVORRAGENDEN ZIEHEIGENSCHAFTEN UND EINER KOHLENSTOFFMASSEPROPORTION GRÖSSER GLEICH 0,6 % ODER KLEINER GLEICH 0,74 %
HIGH-DRAWABILITY STEEL WIRE WITH A PROPORTION BY MASS OF CARBON OF A VALUE WHICH IS GREATER THAN OR EQUAL TO 0.6 % AND LESS THAN OR EQUAL TO 0.74 %

(30) Priorité: 07.09.2012 FR 1258402
(43) Date de publication de la demande: 15.07.2015
(73) Titulaire: Compagnie Générale des Etablissements Michelin, 63000 Clermont-Ferrand (FR)
(72) Inventeur: VERLEENE, Arnaud, F-63040 Clermont-ferrand Cedex 9 (FR); NOEL, Sébastien, F-63040 Clermont-ferrand Cedex 9 (FR)
(74) Mandataire: Desbordes, Guillaume
(86) Numéro de dépôt international: PCT/EP2013/066114
(87) Numéro de publication internationale: WO 2014/037164

(56) Documents cités:
- EP-A1- 0 233 659
- JP-A- 8 325 964
- JP-A- 59 035 655
- JP-A- 2007 131 945
- ANONYMOUS: "Micro-alloyed steel cord constructions for tyres", RESEARCH DISCLOSURE, MASON PUBLICATIONS, HAMPSHIRE, GB, vol. 349, no. 84, 1 mai 1993 (1993-05-01), XP007119044, ISSN: 0374-4353 cité dans la demande

## Description

L'invention concerne un fil en acier, notamment pour pneumatique.

Un pneumatique à armature de carcasse, par exemple radiale, comprend une bande de roulement, deux bourrelets inextensibles, deux flancs reliant les bourrelets à la bande de roulement et une armature de sommet, disposée circonférentiellement entre l'armature de carcasse et la bande de roulement.

L'armature de sommet et/ou de carcasse comprend une ou plusieurs nappes de caoutchouc, éventuellement renforcées par des éléments de renforcement ou renforts tels que des fils unitaires métalliques ou des câbles métalliques provenant de l'assemblage de plusieurs fils unitaires métalliques. Les renforts métalliques sont en acier.

L'armature de sommet est généralement constituée d'au moins deux nappes de sommet superposées, dites parfois nappes "de travail" ou nappes "croisées", dont les câbles de renforcement, en général métalliques, sont disposés pratiquement parallèles les uns aux autres à l'intérieur d'une nappe, mais croisés d'une nappe à l'autre, c'est-à-dire inclinés, symétriquement ou non, par rapport au plan circonférentiel médian, d'un angle qui est généralement compris entre 10° et 45° selon le type de pneu considéré. Les nappes croisées peuvent être complétées par diverses autres nappes ou couches de caoutchouc auxiliaires, de largeurs variables selon les cas, comportant ou non des renforts. On citera à titre d'exemple de simples coussins de gomme, des nappes dites "de protection" chargées de protéger le reste de l'armature de sommet des agressions externes, des perforations, ou encore des nappes dites "de frettage" comportant des renforts orientés sensiblement selon la direction circonférentielle (nappes dites "à zéro degré"), qu'elles soient radialement externes ou internes par rapport aux nappes croisées.

Toutefois, ces renforts métalliques contribuent de façon significative à la masse du pneumatique que l'on souhaite alléger le plus possible, en améliorant, si possible, leur résistance mécanique.

Il est alors préconisé d'augmenter le taux en masse d'éléments de l'acier, par exemple de carbone, à hauteur de 0,9 %, voire plus, ce qui permet d'augmenter la résistance mécanique des fils, donc d'en réduire le diamètre et/ou la densité dans les nappes de renfort, et ainsi d'alléger le pneumatique. On obtient un pneumatique allégé mais présentant une endurance relativement modeste. En effet, les renforts métalliques sont plus sensibles à la fatigue et à la corrosion du fait de l'utilisation de taux de carbone en masse relativement élevés.

Des solutions sont divulguées dans les documents JPH08325964 et JP200713945 A.

L'invention a pour but de fournir un renfort métallique plus léger, de haute résistance mécanique et endurant, notamment à la corrosion.

A cet effet, l'invention a pour objet un Fil d'acier de diamètre d exprimé en mm, présentant un taux de carbone en masse C, exprimé en %, tel que 0,6 % ≤ C ≤ 0,74 % et une contrainte maximale avant rupture R, exprimée en MPa, et mesurée selon la norme ISO 6892 de 1984, telle que :
- Pour d < 0,17, R ≥ A.(920.C + 500)/d^{1/2} avec A=0,96 et R≥3200 MPa,
- Pour 0,17 ≤ d ≤ 0,23 et plus préférentiellement pour 0,17 ≤ d < 0,23, R ≥ A. (920.C + 500)/d^{1/2} avec A=1,24 et R≥3250 MPa,
   l'acier comprenant moins de 11% de chrome, et au moins 50% de fer, entre 0,3 % et 0,7 % en masse de Manganèse, entre 0,1 % et 0,3 % en masse de silicium, au plus 0,045 % en masse de phosphore, au plus 0,045 % en masse de soufre, au plus 0,008 % borne incluse en masse d'azote, au plus 0,001% borne incluse en masse de bore et au plus 0,05% borne incluse en masse de cobalt.

D'une part, le fil selon l'invention présente un taux de carbone en masse relativement faible. Ainsi, le fil est relativement peu sensible à la fatigue et à la corrosion ce qui améliore l'endurance du pneumatique. En outre, le fil selon l'invention présente une contrainte maximale avant rupture R au moins équivalente à celle de fils présentant un taux de carbone en masse C plus élevé.

D'autre part, le fil selon l'invention présente une contrainte maximale avant rupture bien plus élevée qu'un fil de l'état de la technique présentant un taux de carbone en masse équivalent. En effet, le taux de carbone en masse étant relativement faible, on améliore la tréfilabilité du fil, c'est-à-dire la possibilité d'écrouir suffisamment le fil par tréfilage pour lui conférer des propriétés de résistance mécaniques nouvelles et inventives, notamment une contrainte maximale avant rupture élevée.

Ainsi, on peut réduire le diamètre du fil, et donc alléger le pneumatique, tout en conservant une résistance mécanique suffisante pour renforcer le pneumatique.

En outre, le coût de revient industriel est relativement faible du fait de son taux de carbone en masse relativement faible.

Lorsque le diamètre d est trop grand, la flexibilité et l'endurance du fil avec un tel taux C sont trop faibles pour une utilisation du fil dans certaines nappes du pneumatique, notamment l'armature de carcasse, par exemple pour véhicule de type poids lourd.

La contrainte maximale à la rupture ou limite de rupture correspond à la force nécessaire pour faire rompre le fil. Les mesures de contrainte maximale avant rupture notée R (en MPa) sont effectuées selon la norme ISO 6892 de 1984.

De préférence, 0,65 % ≤ C ≤ 0,74 %.

Avantageusement, pour d < 0,17, A=1,10, de préférence A=1,14 et plus préférentiellement A=1,18.

Avantageusement, pour 0,17 ≤ d ≤ 0,23 et plus préférentiellement pour 0,17 ≤ d < 0,23, A=1,26, de préférence A=1,28 et plus préférentiellement A=1,30.

Avantageusement, pour d < 0,17, R ≥ 3300 MPa, et encore plus préférentiellement R ≥ 3400 MPa.

Avantageusement, pour 0,17 ≤ d ≤ 0,23 et plus préférentiellement pour 0,17 ≤ d < 0,23, R ≥ 3250 MPa et encore plus préférentiellement R ≥ 3500 MPa.

Un tel fil présente une contrainte maximale avant rupture encore améliorée, notamment grâce à leur grande tréfilabilité.

De préférence, R ≤ 3,7.(920.C+500), de préférence R ≤ 3,6.(920.C+500) et plus préférentiellement R ≤ 3,5.(920.C+500).

Ainsi, le fil présente des propriétés mécaniques optimisées pour être utilisé dans un pneumatique.

Avantageusement, d est supérieur ou égal à 0,10 mm et de préférence à 0,12 mm.

Lorsque le diamètre d est trop petit, le coût de revient industriel du fil devient trop important et incompatible avec une production de masse.

De façon optionnelle, la micro-structure de l'acier est ferrito-perlitique ou perlitique. On distingue une micro-structure ferrito-perlitique ou perlitique d'une autre micro-structure, en particulier martensitique par observation métallographique. La micro-structure ferrito-perlitique présente des grains de ferrite ainsi que des zones perlitiques lamellaires. La micro-structure perlitique présente sensiblement uniquement des lamelles de ferrite et de cémentite. Au contraire, la micro-structure martensitique comprend des lattes et/ou des aiguilles que l'homme du métier saura distinguer des grains et des lamelles des micro-structures ferrito-perlitique et perlitique.

De préférence, on observe la micro-structure de l'acier avant toute étape de traitement thermique.

Un autre objet de l'invention est un câble comprenant plusieurs fils tels que définis ci-dessus.

Par exemple, les câbles sont du type à couches ou du type à torons.

On rappelle qu'il existe deux techniques possibles d'assemblage de fils ou de torons:
- soit par câblage: dans un tel cas, les fils ou torons ne subissent pas de torsion autour de leur propre axe, en raison d'une rotation synchrone avant et après le point d'assemblage ;
- soit par retordage : dans un tel cas, les fils ou torons subissent à la fois une torsion collective et une torsion individuelle autour de leur propre axe, ce qui génère un couple de détorsion sur chacun des fils ou torons.

L'invention a également pour objet un élément semi-fini, comprenant une matrice en caoutchouc dans lequel est noyé au moins un fil tel que défini ci-dessus.

La matrice en caoutchouc comprend au moins un élastomère diénique, une charge renforçante, un système de vulcanisation et divers additifs.

Par élastomère diénique de la matrice en caoutchouc, on entend de manière générale un élastomère issu au moins en partie (i.e. un homopolymère ou un copolymère) de monomères diènes (monomères porteurs de deux doubles liaisons carbone-carbone, conjuguées ou non).

Les élastomères diéniques, de manière connue, peuvent être classés en deux catégories : ceux dits "essentiellement insaturés" et ceux dits "essentiellement saturés". De manière particulièrement préférentielle, l'élastomère diénique de la matrice en caoutchouc est choisi dans le groupe des élastomères diéniques (essentiellement insaturés) constitué par les polybutadiènes (BR), les polyisoprènes de synthèse (IR), le caoutchouc naturel (NR), les copolymères de butadiène, les copolymères d'isoprène et les mélanges de ces élastomères. De tels copolymères sont plus préférentiellement choisis dans le groupe constitué par les copolymères de butadiène-styrène (SBR), les copolymères d'isoprène-butadiène (BIR), les copolymères d'isoprène-styrène (SIR), les copolymères d'isoprène-butadiène-styrène (SBIR) et les mélanges de tels copolymères.

La matrice en caoutchouc peut contenir un seul élastomère diénique ou un mélange de plusieurs élastomères diéniques, le ou les élastomères diéniques pouvant être utilisés en association avec tout type d'élastomère synthétique autre que diénique, voire avec des polymères autres que des élastomères, par exemple des polymères thermoplastiques.

A titre de charge renforçante, on utilise préférentiellement du noir de carbone ou une charge inorganique. Plus particulièrement, comme noirs de carbone conviennent tous les noirs de carbone, notamment les noirs du type HAF, ISAF, SAF, conventionnellement utilisés dans les pneumatiques. A titre d'exemples non limitatifs de tels noirs, on peut citer les noirs N115, N134, N234, N330, N339, N347, N375. Cependant le noir de carbone peut bien entendu être utilisé en coupage avec des charges renforçante et en particulier d'autres charges inorganiques. De telles charges inorganiques comprennent de la silice, notamment des silices hautement dispersibles, par exemple les silices Ultrasil 7000 et Ultrasil 7005 de la société Degussa.

Enfin, l'homme du métier comprendra qu'à titre de charge équivalente de la charge inorganique renforçante décrite dans le présent paragraphe, pourrait être utilisée une charge renforçante d'une autre nature, notamment organique, dès lors que cette charge renforçante serait recouverte d'une couche inorganique telle que silice, ou bien comporterait à sa surface des sites fonctionnels, notamment hydroxyles, nécessitant l'utilisation d'un agent de couplage pour établir la liaison entre la charge et l'élastomère.

A la charge renforçante peuvent être également ajoutés, selon l'application visée, des charges inertes (non renforçantes) telles que particules d'argile, bentonite, talc, craie, kaolin, utilisables par exemple dans des flancs ou des bandes de roulement de pneumatiques colorés.

La matrice en caoutchouc peut comporter également tout ou partie des additifs usuels habituellement utilisés dans les compositions d'élastomères destinées à la fabrication de pneumatiques, comme par exemple des plastifiants ou des huiles d'extension, que ces derniers soient de nature aromatique ou non-aromatique, des pigments, des agents de protection tels que cires anti-ozone, anti-ozonants chimiques, anti-oxydants, des agents anti-fatigue, des résines renforçantes, des accepteurs (par exemple résine phénolique novalaque) ou des donneurs de méthylène (par exemple HMT ou H3M).

La matrice en caoutchouc comprend également un système de vulcanisation à base soit de soufre, soit de donneurs de soufre et/ou de peroxyde et/ou de bismaléimides, des accélérateurs de vulcanisation, des activateurs de vulcanisation.

Le système de vulcanisation proprement dit est préférentiellement à base de soufre et d'un accélérateur primaire de vulcanisation, en particulier d'un accélérateur du type sulfénamide, tel que choisi dans le groupe constitué par disulfure de 2-mercaptobenzothiazyle (MBTS), N-cyclohexyl-2-benzothiazyle sulfénamide (CBS), N,N-dicyclohexyl-2-benzothiazyle sulfénamide (DCBS), N-ter-butyl-2-benzothiazyle sulfénamide (TBBS), N-ter-butyl-2-benzothiazyle sulfénimide (TBSI) et les mélanges de ces composés.

L'invention a pour autre objet un pneumatique comprenant un fil tel que défini ci-dessus.

De préférence, le pneumatique est destiné à des véhicules de tourisme, des véhicule industriels choisis parmi des camionnettes, véhicules lourds tels que "Poids lourd" - i.e., métro, bus, engins de transport routier (camions, tracteurs, remorques), véhicules hors-la-route -, engins agricoles ou de génie civil, aéronef, autres véhicules de transport ou de manutention. Plus préférentiellement, le pneumatique est destiné à des véhicules lourds, engins agricoles ou de génie civil, aéronef, autres véhicules de transport ou de manutention.

De préférence, le fil est destiné à renforcer une armature de sommet et/ou de carcasse de pneumatique. Plus préférentiellement, le fil est destiné à renforcer une armature de carcasse de pneumatique.

De préférence, le pneumatique est pour un véhicule de type poids-lourd comprenant une armature de carcasse comprenant au moins un fil tel que décrit ci-dessus.

L'invention sera mieux comprise à la lecture de la description qui va suivre, donnée uniquement à titre d'exemple non limitatif et faite en se référant aux dessins dans lesquels :
- la figure 1 une vue en coupe perpendiculaire à la direction circonférentielle d'un pneumatique selon l'invention ;
- la figure 2 est un diagramme illustrant des étapes d'un procédé de tréfilage permettant d'obtenir le fil selon l'invention.

### EXEMPLE DE PNEUMATIQUE SELON L'INVENTION

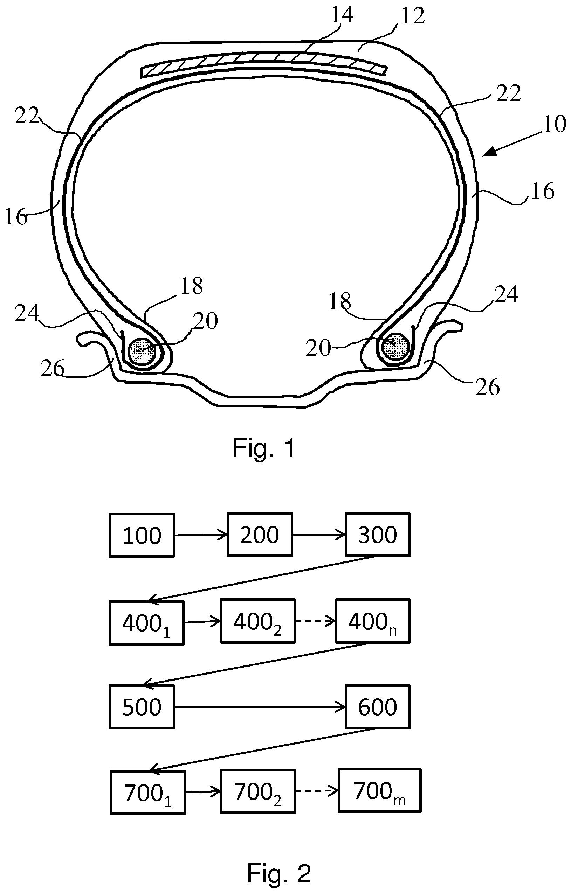

On a représenté sur la figure 1 un pneumatique selon l'invention et désigné par la référence générale 10.

Le pneumatique 10 comporte un sommet 12 renforcé par une armature de sommet 14, deux flancs 16 et deux bourrelets 18, chacun de ces bourrelets 18 étant renforcé avec une tringle 20. Le sommet 12 est surmonté d'une bande de roulement non représentée sur cette figure schématique. Une armature de carcasse 22 est enroulée autour des deux tringles 20 dans chaque bourrelet 18 et comprend un retournement 24 disposé vers l'extérieur du pneumatique 10 qui est ici représenté monté sur une jante 26.

L'armature de carcasse 22 est de manière connue en soi constituée d'au moins une nappe renforcée par des fils ou des câbles conformes à l'invention. Ces fils ou câbles de l'armature de carcasse sont dits "radiaux", c'est-à-dire que ces fils ou câbles sont disposés pratiquement parallèles les uns aux autres et s'étendent d'un bourrelet à l'autre de manière à former un angle compris entre 80° et 90° avec le plan circonférentiel médian (plan perpendiculaire à l'axe de rotation du pneumatique qui est situé à mi-distance des deux bourrelets 18 et passe par le milieu de l'armature de sommet 14).

L'armature de sommet 14 comporte au moins une nappe renforcée par des fils ou des câbles conformes à l'invention. Dans cette armature de sommet 14 schématisée de manière très simple sur la figure 1, on comprendra que les fils ou câbles de l'invention peuvent par exemple renforcer tout ou partie des nappes sommet de travail, ou des nappes (ou demi-nappes) sommet de triangulation et/ou des nappes sommet de protection, lorsque de telles nappes sommet de triangulation ou de protection sont utilisées. Outre les nappes de travail, celles de triangulation et/ou de protection, l'armature de sommet 14 du pneumatique de l'invention peut bien entendu comporter d'autres nappes sommet, par exemple une ou plusieurs nappes sommet de frettage.

Bien entendu, le pneumatique 10 comporte en outre de manière connue une couche de gomme ou élastomère intérieure (communément appelée "gomme intérieure") qui définit la face radialement interne du pneumatique et qui est destinée à protéger l'armature de carcasse de la diffusion d'air provenant de l'espace intérieur au pneumatique. Avantageusement, en particulier dans le cas d'un pneumatique pour véhicule Poids-lourd, il peut comporter en outre une couche élastomère intermédiaire de renfort qui est située entre l'armature de carcasse et la couche intérieure, destinée à renforcer la couche intérieure et, par conséquent, l'armature de carcasse, également destinée à délocaliser partiellement les efforts subis par l'armature de carcasse.

Le pneumatique est fabriqué par assemblage des différents éléments décrits ci-dessus présents sous forme d'éléments semi-finis comprenant une matrice de caoutchouc dans laquelle sont noyés les fils ou les câbles conformes à l'invention.

### EXEMPLES DE CABLE SELON L'INVENTION

Dans le cas où l'armature de sommet et/ou de carcasse est renforcée par des câbles, ceux-ci sont fabriqués par assemblage de plusieurs fils d'acier conformes à l'invention, soit par câblage, soit par retordage.

Dans le cas d'un pneumatique pour des véhicules industriels choisis parmi des camionnettes, des véhicules lourds tels que "Poids lourd" - i.e., métro, bus, engins de transport routier (camions, tracteurs, remorques), véhicules hors-la-route -, engins agricoles ou de génie civil, aéronef, autres véhicules de transport ou de manutention, l'armature de sommet et/ou de carcasse est renforcée par des câbles conformes à l'invention notamment choisis parmi les câbles à couches de structure 1+3+8, 1+6+11, 1+6+12, 2+7, 3+8, 3+9, 3+9+15 et les câbles à torons de structure 3 x (1+5), (1+6) x (3+8), (1+6) x (3+9+15), (1+6) x (4+10+16). D'autres câbles pouvant renforcer l'armature de sommet et/ou de carcasse sont également décrits dans le document WO 2010/139583.

Dans le cas d'un pneumatique pour des véhicules de tourisme, l'armature de sommet et/ou de carcasse est renforcée par des câbles conformes à l'invention et notamment choisis parmi les câbles de structure 2+1, 2+2, 2+4 et 4x3.

Les câbles conformes à l'invention peuvent être gommés *in situ*, comme cela est décrit, entre autres, dans le document WO 2010/139583.

L'armature de sommet et/ou de carcasse peut également être renforcée par un ou plusieurs fils unitaires conformes à l'invention mais non assemblés.

### EXEMPLES DE FIL SELON L'INVENTION

Le fil est en acier, c'est-à dire qu'il est constitué majoritairement (c'est-à-dire pour plus de 50% en masse) ou intégralement (pour 100% en masse) d'acier.

Le fil est préférentiellement en acier ferrito-perlitique ou perlitique au carbone désigné ci-après par "acier au carbone" (par définition, acier comportant moins de 11% de chrome et au moins 50% de fer). L'acier utilisé, qu'il s'agisse en particulier d'un acier au carbone, comprend un taux de carbone C, exprimé en %, en masse d'acier tel que 0,6 % ≤ C ≤ 0,74 % de préférence 0,65 % ≤ C < 0,74 %. L'acier utilisé comprend du fer, entre 0,3 et 0,7 % en masse de Manganèse, ici 0,5%, entre 0,1 et 0,3 % en masse de silicium, ici 0,2%, au plus 0,045 % en masse de phosphore, ici 0%, au plus 0,045 % en masse de soufre, ici 0%, et au plus 0,008 % en masse d'azote, ici 0%.

L'acier utilisé peut également comprendre des éléments d'addition spécifiques tels que Cr, Ni, Co, V, ou divers autres éléments connus (voir par exemple Research Disclosure 34984 - "Micro-alloyed steel cord constructions for tyres" - mai 1993 ; Research Disclosure 34054 - "High tensile strength steel cord constructions for tyres"- août 1992) permettant d'adapter l'acier à une utilisation bien précise.

L'acier utilisé comprend au plus 0,1% borne incluse, de préférence 0,05% borne incluse, et plus préférentiellement 0,02% borne incluse en masse de vanadium, ici 0%.

L'acier utilisé comprend au plus 0,1% borne incluse, de préférence 0,05% borne incluse, et plus préférentiellement 0,02% borne incluse en masse de chrome, ici 0%.

L'acier utilisé comprend au plus 0,1% borne incluse, de préférence 0,05% borne incluse, et plus préférentiellement 0,02% borne incluse en masse de molybdène, ici 0%.

L'acier utilisé comprend au plus 0,1% borne incluse, de préférence 0,05% borne incluse, et plus préférentiellement 0,02% borne incluse en masse de vanadium, de chrome et de molybdène.

L'acier utilisé comprend au plus 0,05% borne incluse, de préférence 0,01% borne incluse, et plus préférentiellement 0,001% borne incluse en masse de nickel, ici 0%.

L'acier utilisé comprend au plus 0,001% borne incluse en masse de bore, ici 0%.

L'acier utilisé comprend au plus 0,05% borne incluse, de préférence 0,01% borne incluse, et plus préférentiellement 0,001% borne incluse en masse de cobalt, ici 0%.

Le fil peut être revêtu d'une couche métallique améliorant par exemple les propriétés de mise en oeuvre du fil, ou les propriétés d'usage du fil, du câble et/ou du pneumatique eux-mêmes, telles que les propriétés d'adhésion, de résistance à la corrosion ou encore de résistance au vieillissement. De préférence, le fil est revêtu d'une couche de laiton (alliage Cu-Zn) ou de zinc.

On a rassemblé dans le tableau 1 ci-dessous des fils selon l'état de la technique et l'invention.

Les fils des exemples des tableaux 1 et 2 présentent un diamètre d supérieur ou égal à 0,10 mm et de préférence à 0,12 mm. En outre, les fils des exemples des tableaux 1 et 2 présentent un diamètre d inférieur ou égal à 0,25 mm et de préférence à 0,23 mm.

**Tableau 1**

| | **Etat de la technique 1** | **Exemple 1** |
|---|---|---|
| **Taux de carbone C en masse (%)** | 0,71 | 0,71 |
| **Diamètre d du fil (mm)** | 0,15 | 0,15 |
| **Contrainte maximale avant rupture R (MPa)** | 2850 | 3590 |

L'exemple 1 est tel que, contrairement au fil de l'état de la technique 1, la contrainte maximale avant rupture R du fil, exprimée en MPa, est telle que, pour d<0,17 mm, R ≥ A.(920.C + 500)/d^{1/2} avec A=0,96.

On notera que le fil de l'exemple 1 est tel que, pour d<0,17 mm, A=1,10, de préférence A=1,14 et encore plus préférentiellement A=1,18.

On notera que le fil de l'exemple 1 est tel que, pour d<0,17 mm, R ≥ 2900 MPa, de préférence R ≥ 3200 MPa, plus préférentiellement R ≥ 3300 MPa, et encore plus préférentiellement R ≥ 3400 MPa.

**Tableau 2**

| | **Etat de la technique 2** | **Exemple 2** | **Exemple 3** |
|---|---|---|---|
| **Taux de carbone C en masse (%)** | 0,71 | 0,71 | 0,71 |
| **Diamètre d du fil (mm)** | 0,18 | 0,18 | 0,18 |
| **Contrainte maximale avant rupture R (MPa)** | 2820 | 3570 | 3660 |

Les exemples 2 et 3 sont tels que, pour 0,17 ≤ d ≤ 0,23 mm et plus préférentiellement pour 0,17 ≤ d < 0,23, contrairement au fil de l'état de la technique 2, la contrainte maximale avant rupture R du fil, exprimée en MPa, est telle que R ≥ A.(920.C + 500)/d^{1/2} avec A=1,24.

On notera que les fils des exemples 2 et 3 sont tels que, pour 0,17 ≤ d ≤ 0,23 mm et plus préférentiellement pour 0,17 ≤ d < 0,23, de préférence, A=1,26 et plus préférentiellement A=1,28. On notera également que le fil de l'exemple 3 est tel que, pour 0,17 ≤ d ≤ 0,23 mm, de préférence, A=1,30.

On notera que les fils des exemples 2 et 3 sont tels que, pour 0,17 ≤ d ≤ 0,23 mm et plus préférentiellement pour 0,17 ≤ d < 0,23, R ≥ 3000 MPa, de préférence R ≥ 3200 MPa, plus préférentiellement R ≥ 3250 MPa, et encore plus préférentiellement R ≥ 3500 MPa.

Le fils des exemples 1 à 3, présentent une contrainte maximale avant rupture R ≤ 3,7.(920.C+500), de préférence R ≤ 3,6.(920.C+500) et plus préférentiellement R ≤ 3,5.(920.C+500).

### EXEMPLE DE PROCEDE DE TREFILAGE DU FIL SELON L'INVENTION

On a représenté sur la figure 2 un diagramme d'un procédé permettant de tréfiler un fil selon l'invention.

Dans une étape 100 de déroulage, on déroule un fil d'acier de diamètre initial D≥4, de préférence D≥5, ici égal à 5,5 mm et présentant une contrainte maximale à la rupture comprise entre 850 MPa et 1200 MPa, en l'espèce R=1200 MPa. Le fil, appelé fil machine est stocké sous forme d'une botte sur un dévidoir duquel on le déroule grâce à des moyens automatisés de déroulage, par exemple un dérouleur. La micro-structure de l'acier est alors ferrito-perlitique.

Dans une étape 200 de décalaminage du fil machine, on fait passer le fil machine dans plusieurs poulies successives et dans deux dresseurs formés chacun par plusieurs poulies, les poulies de chaque dresseur étant montée en rotation selon un axe perpendiculaire à l'axe de rotation des poulies de l'autre dresseur. On enlève ainsi une couche d'oxydes de fer, appelé calamine, présente en surface du fil machine.

Dans une étape 300, on revêt le fil machine d'une couche d'un promoteur d'adhésion d'un lubrifiant de tréfilage.

Les étapes 400₁ à 400ₙ ont pour but de réduire le diamètre du fil du diamètre initial D vers un diamètre intermédiaire d', par exemple supérieur ou égal à 1 mm et de préférence à 1,3 mm et par exemple inférieur ou égal à 2,2 mm et de préférence à 2 mm.

Les étapes 400₁ à 400ₙ (n variant de 6 à 12) forment une série ininterrompue d'étapes de tréfilage en milieu sec du fil du diamètre initial D vers le diamètre intermédiaire d'. Chaque étape 400₁ à 400ₙ est une étape de tréfilage en milieu sec dans laquelle on fait passer le fil dans une filière de diamètre inférieur au diamètre du fil en amont de la filière. Ainsi, le fil présente un diamètre en aval de la filière inférieur au diamètre en amont de la filière. Le diamètre de chaque filière est inférieur au diamètre de la filière située en amont. Pour la série ininterrompue d'étapes de tréfilage en milieu sec du fil du diamètre initial D vers le diamètre intermédiaire d', on définit la déformation rationnelle ε=2.ln(D/d').

Des moyens de traction du fil positionnés en aval de chaque filière, ici des cabestans, permettent d'exercer une force de traction suffisante pour tirer le fil à travers chaque filière. On utilise un lubrifiant de tréfilage sous forme pulvérulente.

Par tréfilage en milieu sec, on comprend que le fil circule dans un milieu gazeux, par exemple l'air ambiant. De préférence, le lubrifiant de tréfilage lors d'un tréfilage en milieu sec est sous forme pulvérulente. Lors d'un tréfilage en milieu sec, les moyens de tractions, par exemple des cabestants, sont exposés au milieu gazeux, par exemple l'air ambiant.

Par série ininterrompue d'étapes de tréfilage, on entend que le fil ne subit aucune étape, en particulier de traitement thermique, autre qu'une étape de tréfilage entre deux étapes de tréfilage de la série. En d'autres termes, le fil ne subit aucune étape, en particulier de traitement thermique, entre deux étapes directement successives de tréfilage de la série.

Dans une étape 500 de traitement thermique, on modifie la structure métallographique du fil de diamètre intermédiaire d' pour régénérer la structure du fil machine.

Lors de cette étape 500, on chauffe le fil de diamètre intermédiaire d' à la température d'austénisation de l'acier, ici supérieure ou égale à 850°C, puis on le refroidit de façon conférer à l'acier une micro-structure perlitique ou ferrito-perlitique. Dans une étape 600, on revêt le fil de diamètre intermédiaire d' d'au moins une couche métallique, ici une couche de laiton.

Les étapes 700₁ à 700ₘ (m variant de 8 à 23) ont pour but de réduire le diamètre du fil du diamètre intermédiaire d' vers le diamètre final d et d'augmenter la contrainte maximale à rupture du fil.

Les étapes 700₁ à 700ₘ forment une série ininterrompue d'étapes de tréfilage en milieu humide du fil du diamètre intermédiaire d' vers le diamètre final d. Chaque étape 700₁ à 700ₘ est une étape de tréfilage en milieu humide dans laquelle on fait passer le fil dans une filière de diamètre inférieur au diamètre du fil en amont de la filière. Ainsi, le fil présente un diamètre en aval de la filière inférieur au diamètre en amont de la filière. Le diamètre de chaque filière est inférieur au diamètre de la filière située en amont. Pour la série ininterrompue d'étapes de tréfilage en milieu humide du fil du diamètre intermédiaire d' vers le diamètre final d, on définit la déformation rationnelle ε'=2.ln(d'/d).

En variante, on réalisera les étapes 700₁ à 700ₘ en milieu sec.

Des moyens de traction du fil positionnés en aval de chaque filière, ici des cabestans à étages, permettent d'exercer une force de traction suffisante pour tirer le fil à travers chaque filière. Les moyens de tractions et les filières sont immergés dans un bain liquide de lubrifiant de tréfilage, par exemple tel que décrit dans le document WO 2008/113481.

Par tréfilage en milieu humide, on comprend que le fil circule dans un milieu liquide, par exemple une solution aqueuse. De préférence, le lubrifiant de tréfilage lors d'un tréfilage en milieu humide est sous forme liquide. Lors d'un tréfilage en milieu humide, les moyens de tractions, par exemple des cabestans, sont exposés au milieu liquide, par exemple la solution aqueuse.

Par série ininterrompue d'étapes de tréfilage, on entend que le fil ne subit aucune étape, en particulier de traitement thermique, autre qu'une étape de tréfilage entre deux étapes de tréfilage de la série. En d'autres termes, le fil ne subit aucune étape, en particulier de traitement thermique, entre deux étapes directement successives de tréfilage de la série.

Le procédé de tréfilage comprend ainsi N séries ininterrompues d'étapes de tréfilage, par exemple une en milieu sec et une en milieu humide. Ici N=2. Ainsi, on peut définir la déformation rationnelle totale pour le procédé de tréfilage εT=2.ln(D/d).

Le procédé de tréfilage comprend M étape(s) de traitement thermique visant à régénérer la structure du fil machine. Ici M=1 ce qui permet de réduire le coût de revient industriel du fil de diamètre d.

Le fil selon l'invention est susceptible d'être obtenu par le procédé décrit ci-dessus.

On a rassemblé dans le tableau 3 différentes valeurs des caractéristiques des fils et du procédé décrits ci-dessus et d'un fil de l'état de la technique.

**Tableau 3**

| | **Etat de la technique 1** | **Exemple 1** | **Etat de la technique 2** | **Exemple 2** | **Exemple 3** |
|---|---|---|---|---|---|
| **C (%)** | 0,71 | 0,71 | 0,71 | 0,71 | 0,71 |
| **d' (mm)** | 0,75 | 1,3 | 1 | 1,5 | 1,7 |
| **d (mm)** | 0,15 | 0,15 | 0,18 | 0,18 | 0,18 |
| **ε** | 4,0 | 2,9 | 3,4 | 2,5 | 2,3 |
| **ε'** | 3,2 | 4,3 | 3,4 | 4,3 | 4,5 |
| **εT** | 7,2 | 7,2 | 6,8 | 6,8 | 6,8 |
| **R (Mpa)** | 2850 | 3590 | 2820 | 3570 | 3660 |

On notera que, pour les exemples 1 à 3, ε ≤ 3, de préférence ε ≤ 2,75 pour les exemples 2 et 3 et plus préférentiellement ε ≤ 2,5 pour l'exemple 3. On notera également que, pour les exemples 1 à 3, εT ≥ 6,5 et de préférence εT ≥ 6,75. Pour l'exemple 1, on a plus préférentiellement εT ≥ 7.

En outre, on notera que, contrairement aux états de la technique 1 et 2, ε' > 4, voire ε' ≥ 4,3 pour les exemples 1 à 3. De préférence, on a ε' ≥ 4,5 pour l'exemple 3.

L'invention ne se limite pas aux modes de réalisation précédemment décrits.

En effet, l'étape 200 de décalaminage peut être réalisée par action d'un agent chimique, par exemple de l'acide.

De plus, lors de l'étape 600, il est possible de revêtir le fil de diamètre intermédiaire uniquement d'une couche de zinc. En outre, le fil pourrait être recouvert d'une couche métallique autre que du laiton ou du zinc, ayant par exemple pour fonction d'améliorer la résistance à la corrosion du fil et/ou leur adhésion à la gomme, par exemple une fine couche de Co, Ni, Al, d'un alliage de deux ou plus des composés Cu, Zn, Al, Ni, Co, Sn.

## Revendications

1. Fil d'acier de diamètre d exprimé en mm, présentant un taux de carbone en masse C, exprimé en %, tel que 0,6 % ≤ C ≤ 0,74 % et une contrainte maximale avant rupture R, exprimée en MPa, **caractérisé en ce que** la contrainte maximale avant rupture R, mesurée selon la norme ISO 6892 de 1984, est telle que :
- Pour d < 0,17, R ≥ A*(920*C + 500)d^{1/2} avec A=0,96 et R ≥ 3200 MPa,
- Pour 0,17 ≤ d ≤ 0,23, R ≥ A*(920*C + 500)/d^{1/2} avec A=1,24 et R ≥ 3250 MPa,
l'acier comprenant au plus 0,1% borne incluse en masse de chrome, au moins 50% de fer, entre 0,3 et 0,7 % en masse de Manganèse, entre 0,1 et 0,3 % en masse de silicium, au plus 0,045 % en masse de phosphore, au plus 0,045 % en masse de soufre, au plus 0,008 % borne incluse en masse d'azote, au plus 0,1% borne incluse en masse de molybdène, au plus 0,1% borne incluse en masse de vanadium, au plus 0,1% borne incluse en masse de vanadium, chrome, molybdène, au plus 0,05% borne incluse en masse de nickel, au plus 0,001% borne incluse en masse de bore et au plus 0,05% borne incluse en masse de cobalt.

2. Fil selon la revendication précédente, dans lequel 0,65 % ≤ C ≤ 0,74 %.

3. Fil selon l'une quelconque des revendications précédentes, dans lequel, pour d < 0,17, A=1,10, de préférence A=1,14 et plus préférentiellement A=1,18.

4. Fil selon l'une quelconque des revendications précédentes, dans lequel, pour 0,17 ≤ d ≤ 0,23, A=1,26, de préférence A=1,28 et plus préférentiellement A=1,30.

5. Fil selon l'une quelconque des revendications précédentes, dans lequel, pour d < 0,17, R ≥ 3300 MPa et encore plus préférentiellement R ≥ 3400 MPa.

6. Fil selon l'une quelconque des revendications précédentes, dans lequel, pour 0,17 ≤ d ≤ 0,23, R ≥ 3500 MPa.

7. Fil selon l'une quelconque des revendications précédentes, dans lequel R ≤ 3,7*(920*C+500) de préférence R ≤ 3,6*(920*C+500) et plus préférentiellement R ≤ 3,5*(920*C+500)

8. Fil selon l'une quelconque des revendications précédentes, dans lequel d est supérieur ou égal à 0,10 mm et de préférence à 0,12 mm.

9. Fil selon l'une quelconque des revendications précédentes, dans lequel la micro-structure de l'acier est ferrito-perlitique ou perlitique.

10. Câble, **caractérisé en ce qu'**il comprend plusieurs fils selon l'une quelconque des revendications précédentes.

11. Elément semi-fini (14, 22), **caractérisé en ce qu'**il comprend une matrice en caoutchouc dans lequel est noyé au moins un fil selon l'une quelconque des revendications 1 à 9.

12. Pneumatique (10), **caractérisé en ce qu'il** comprend au moins un fil selon l'une quelconque des revendications 1 à 9.

13. Pneumatique (10) selon la revendication précédente, pour véhicule de type poids-lourd comprenant une armature de carcasse (22) comprenant au moins un fil selon l'une quelconque des revendications 1 à 9.

## Patentansprüche

1. Stahldraht mit einem Durchmesser d, ausgedrückt in mm, der einen Kohlenstoffgehalt in Masse C, ausgedrückt in % wie 0,6 % ≤ C ≤ 0,74 % und eine maximale Vorbruchspannung R, ausgedrückt in MPa aufweist, **dadurch gekennzeichnet, dass** die maximale Vorbruchspannung R, gemessen nach der Norm ISO 6892 aus 1984, so ist, dass:
- für d < 0,17, R ≥ A*(920*C+500)/d^{1/2} wobei A=0,96 und R ≥ 3200 MPa,
- für 0,17 ≤ d ≤ 0,23, R ≥ A*(920*C+500)/d^{1/2} wobei A=1,24 und R ≥ 3250 MPa,
wobei der Stahl höchstens 0,1 Gew.-% Chrom, mindestens 50 Gew.-% Eisen, zwischen 0,3 und 0,7 Gew.-% Mangan, zwischen 0,1 und 0,3 Gew.-% Silizium, höchstens 0,045 Gew.-% Phosphor, höchstens 0,045 Gew.-% Schwefel, höchstens 0,008 Gew.-% Stickstoff, höchstens 0,1 Gew.-% Molybdän, höchstens 0,1 Gew.-% Vanadium, höchstens 0,1 Gew.-% Vanadium, Chrom, Molybdän, höchstens 0,05 Gew.-% Nickel, höchstens 0,001 Gew.-% Bor und höchstens 0,05 Gew.-% Kobalt enthält.

2. Draht nach dem vorhergehenden Anspruch, wobei 0,65 % ≤ C ≤ 0,74 %.

3. Draht nach einem der vorhergehenden Ansprüche, wobei, für d < 0,17, A=1,10, vorzugsweise A=1,14 und stärker bevorzugt A=1,18.

4. Draht nach einem der vorhergehenden Ansprüche, wobei, für 0,17 ≤ d ≤ 0,23 A=1,26, vorzugsweise A=1,28 und stärker bevorzugt A=1,30.

5. Draht nach einem der vorhergehenden Ansprüche, wobei für d < 0,17, R ≥ 3300 MPa und noch stärker bevorzugt R ≥ 3400 MPa.

6. Draht nach einem der vorhergehenden Ansprüche, wobei für 0,17 ≤ d ≤ 0,23 R ≥ 3500 MPa.

7. Draht nach einem der vorhergehenden Ansprüche, in dem R ≤ 3,7 *(920*C+500), vorzugsweise R ≤ 3,6*(920*C+500) und noch stärker bevorzugt R ≤ 3,5*(920*C+500).

8. Draht nach einem der vorhergehenden Ansprüche, wobei d größer oder gleich 0,10 mm und vorzugsweise 0,12 mm ist.

9. Draht nach einem der vorhergehenden Ansprüche, bei dem das Gefüge des Stahls ferritisch-perlitisch oder perlitisch ist.

10. Kabel, **dadurch gekennzeichnet, dass** es mehrere Drähte nach einem der vorhergehenden Ansprüche umfasst.

11. Halbzeug (14, 22), **dadurch gekennzeichnet, dass** es eine Gummimatrix umfasst, in die mindestens ein Draht nach einem der Ansprüche 1 bis 9 eingebettet ist.

12. Reifen (10), **dadurch gekennzeichnet, dass** er mindestens einen Draht nach einem der Ansprüche 1 bis 9 umfasst.

13. Reifen (10) nach dem vorstehenden Anspruch für ein Fahrzeug vom Typ LKW, umfassend eine Karkassenverstärkung (22), umfassend mindestens einen Draht nach einem der Ansprüche 1 bis 9.

## Claims

1. Steel wire of diameter d expressed in mm, having a carbon content by weight C, expressed in %, such that 0.6% ≤ C ≤ 0.74% and a maximum tensile strength R, expressed in MPa, **characterized in that** the maximum tensile strength R, measured according to the ISO 6892 standard of 1984, is such that:
- for d < 0.17, R ≥ A*(920*C + 500)/d^{1/2} with A=0.96 and R ≥ 3200 MPa,
- for 0.17 ≤ d ≤ 0.23, R ≥ A*(920*C + 500)/d^{1/2} with A=1.24, and R ≥ 3250 MPa,
the steel comprising at most 0.1%, limit included, by weight of chromium, at least 50% of iron, between 0.3% and 0.7% by weight of manganese, between 0.1% and 0.3% by weight of silicon, at most 0.045% by weight of phosphorous, at most 0.045% by weight of sulfur, at most at most 0.008%, limit included, by weight of nitrogen, at most 0.1%, limit included, by weight of molybdenum, at most 0.1%, limit included, by weight of vanadium, at most 0.1%, limit included, by weight of vanadium, chromium and molybdenum, at most 0.05%, limit included, by weight of nickel, at most 0.001%, limit included, by weight of boron and at most 0.05%, limit included, by weight of cobalt.

2. Wire according to the preceding claim, in which 0.65% ≤ C ≤ 0.74%.

3. Wire according to either one of the preceding claims, in which, for d < 0.17, A=1.10, preferably A=1.14 and more preferably A=1.18.

4. Wire according to any one of the preceding claims, in which, for 0.17 ≤ d ≤ 0.23, A=1.26, preferably A=1.28 and more preferably A=1.30.

5. Wire according to any one of the preceding claims, in which, for d < 0.17, R ≥ 3300 MPa and more preferably still R ≥ 3400 MPa.

6. Wire according to any one of the preceding claims, in which, for 0.17 ≤ d ≤ 0.23, R ≥ 3500 MPa.

7. Wire according to any one of the preceding claims, in which R ≤ 3.7*(920*C+500), preferably R ≤ 3.6*(920*C+500) and more preferably R ≤ 3.5*(920*C+500).

8. Wire according to any one of the preceding claims, in which d is greater than or equal to 0.10 mm and preferably greater than or equal to 0.12 mm.

9. Wire according to any one of the preceding claims, in which the steel microstructure is ferritic-pearlitic or pearlitic.

10. Cord, **characterized in that** it comprises several wires according to any one of the preceding claims.

11. Semi-finished element (14, 22), **characterized in that** it comprises a rubber matrix in which at least one wire according to any one of Claims 1 to 9 is embedded.

12. Tyre (10), **characterized in that** it comprises at least one wire according to any one of Claims 1 to 9.

13. Tyre (10) according to the preceding claim, for a vehicle of the heavy-duty vehicle type comprising a carcass reinforcement (22) comprising at least one wire according to any one of Claims 1 to 9.
